# EUROPEAN PATENT APPLICATION

(11) **EP 4 851 784 A1**
(43) Date of publication of application: **09.12.2026**
(21) Application number: 26181851.2
(22) Date of filing: 29.05.2026
(51) Int. Cl.: G06F 8/60, G06F 8/36, G06F 8/61, G06F 8/71, G06F 9/445

(54) **PLATFORM FOR APP-INDEPENDENT ASSET-BUNDLE DISTRIBUTION AND LIFECYCLE MANAGEMENT**

(30) Priority: 08.06.2025 US 202563819950 P; 06.02.2026 US 202619532896
(71) Applicant: Apple Inc., Cupertino, CA 95014 (US)
(72) Inventor: JACOBY-COOPER, Gabriel B., Sunnyvale (US)
(74) Representative: COPA Copenhagen Patents

(57) **Abstract**

A technique for publishing application-independent asset bundles includes receiving, by an application distribution system, an asset bundle including asset content and a developer manifest. The asset bundle is associated with an environment type and corresponds to a hosted application. The asset bundle is reviewed by a decision engine in accordance with review parameters corresponding to the environment. Upon completion of review, a download manifest for the hosted application is updated to identify the asset bundle. The download manifest identifies available asset bundles for the hosted application. The system then publishes the asset bundle for distribution, and the asset bundle is available separate from the hosted application.

## Description

### TECHNICAL FIELD

Embodiments described herein relate to a platform for providing software applications. More particularly, embodiments described herein relate to improving app installation by downloading resources independent of the installation package.

### BACKGROUND

In recent years, downloading of software applications (or "apps") from an online distribution platform, such as an app store, has become a popular method for obtaining software applications. An online app store allows users to download a software application onto their device, such as a desktop computer or laptop computer, smartphone, or other mobile device, and then install the app on their device. Prior to downloading an app, users often find apps within the app store.

The online distribution platform may provide apps for download to a local device. However, oftentimes once the apps are downloaded and installed on a local device, the app may still require additional resources before it can be loaded. As an example, many games may require additional resources to be downloaded once the app is installed before the game is operational. As such, the game may not be playable upon installation.

### BRIEF DESCRIPTION OF THE DRAWINGS

Embodiments described herein are illustrated by examples and not limitations in the accompanying drawings, in which like references indicate similar features. Furthermore, in the drawings, some conventional details have been omitted, so as not to obscure the inventive concepts described herein.
FIG. **1** illustrates, in block diagram form, network in which an app distribution server operates, according to one or more embodiments.
FIG. **2** illustrates, in flowchart form, a technique for publishing an asset bundle associated with a hosted application, in accordance with one or more embodiments.
FIG. **3** illustrates, in flow diagram form, a technique for updating an asset bundle state, in accordance with one or more embodiments.

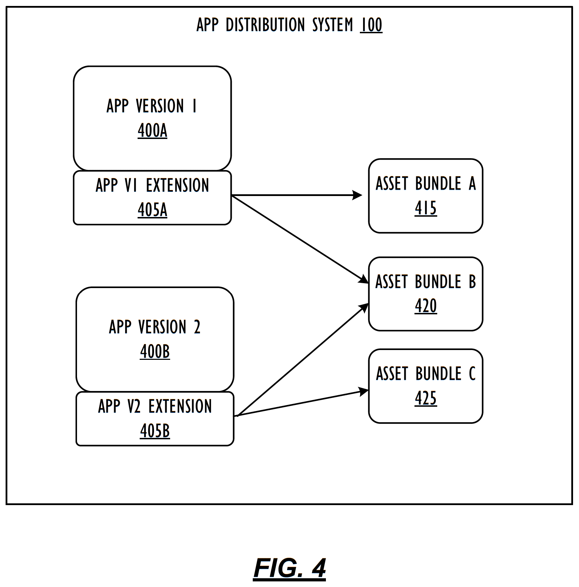

FIG. **4** illustrates an example diagram of multiple versions of an application and associated asset bundles, in accordance with one or more embodiments.
FIG. **5** illustrates a flowchart of a technique for downloading asset bundles at a client device, in accordance with one or more embodiments.
FIG. **6** illustrates an example flow diagram for a client device accessing asset bundles, in accordance with one or more embodiments.
FIG. **7** illustrates a simplified functional block diagram of an illustrative programmable electronic device, in accordance with an embodiment.

### DETAILED DESCRIPTION

This disclosure pertains to systems, methods, and computer readable media for providing a technique for providing app-independent resources in the form of asset bundles independently of an app installation package. This disclosure also pertains to systems, methods, and computer readable media for managing asset bundles in an application distribution platform, such as an app store.

The disclosed embodiments relate to an infrastructure that enables the creation, upload, review, version management, distribution, and lifecycle control of discrete "asset packs," in the form of asset bundles, that include asset content that supplements an application after the initial installation. Accordingly, the corresponding application may be operable without the asset bundles, but the operation and/or look-and-feel of the application may change when the asset bundles are incorporated. Each asset bundle may be packaged using a packaging tool that ingests the asset data, along with a developer manifest describing the asset attributes, such as an identifier, supported platforms, file list, download policy, and the like. Automated validation may be performed on the packaged asset bundle. The asset bundle may then be published. In some embodiments, the platform may apply versioning to the asset bundles to ensure that a single asset bundle version is available for download at a given time. Upon successful import, the bundle enters an "Imported" state, where the platform performs an initial validation. The developer can subsequently submit the asset for review, which triggers a state change for the pack, and which may trigger an automated scan. Upon approval, the server-side process may provide the asset bundle for public release, or for public testing.

When a user installs or launches an application or extension that references an asset bundle, the app may request a download manifest from the app distribution system. The response enumerates available asset bundles for the particular application and, optionally, platform. The client device can then request one or more available asset bundles based on download policies for the asset bundles.

Certain embodiments may reduce developer effort and bandwidth cost by decoupling asset content updates from application submissions, allowing granular, out-of-band delivery changes. In some embodiments, the techniques described herein provide automatic multi-environment versioning so that the same asset bundle can progress from internal testing to external beta testing to public release without re-upload, and may optionally support a single live version per environment. The architecture described herein can be used to offload complex scheduling, versioning, and other processes to the app distribution system with minimal or no custom code.

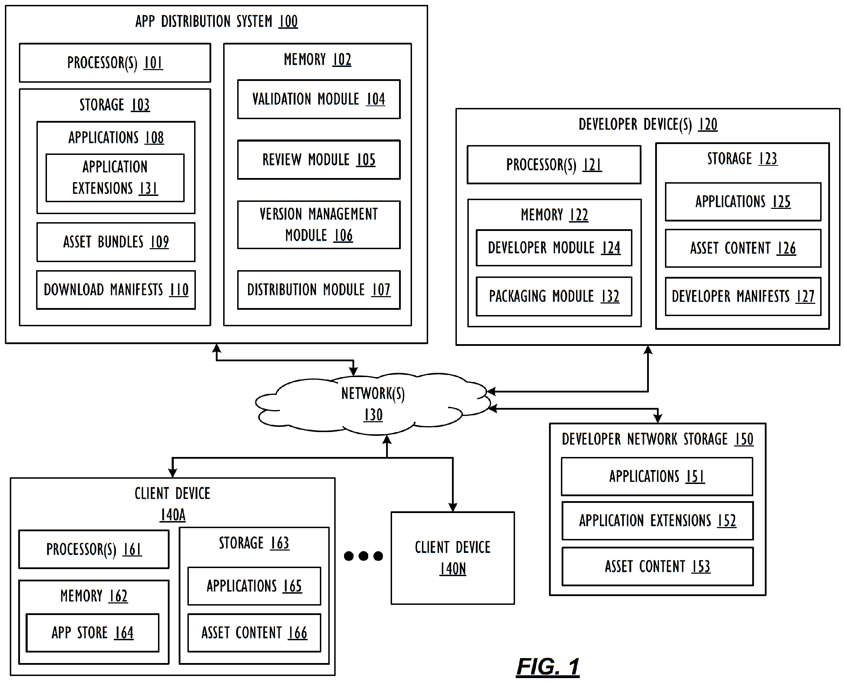

FIG. **1** illustrates, in block diagram form, a network diagram in which app-independent asset bundles are provided, according to one or more embodiments. Although the various processes and components are presented in a particular configuration, in some embodiments the components may be differently distributed across the devices shown, or across additional devices. Further, in some embodiments, some components may be combined, or additional components may be provided.

The network diagram includes an app distribution system 100 communicably connected to a set of client devices 140A-140N and one or more developer device(s) 120 across a network 130. Network 130 may include, for example, the internet, a wide area network, a local area network, or the like, or any combination thereof. Client devices 140A-140N can take a variety of different forms (e.g., tablet computer such as an iPad, smartphone such as an iPhone, laptop computer, desktop computer, network media player such as an Apple TV, game/entertainment system, wearable devices such as a head-mounted device, watch, or the like, or other consumer electronic device). According to one or more embodiments, Client devices 140A-140N may include consumer devices configured to run one or more programming modules, such as applications hosted by app distribution system 100, and originating from developer device(s) 120. The programming modules are processed by one or more processor(s) from a memory.

Developer device(s) 120 may include one or more servers, network devices, client devices, or the like used by a developer for developing and/or uploading applications and associated content, such as asset bundle content. Developer device(s) 120 may include one or more processor(s) 121. The developer device(s) 120 may also include memory 122, which may be comprised of one or more memory devices, and which may be configured to host computer readable code executable by the one or more processor(s) 121. In the example shown, memory 122 includes a developer module 124 and a packaging module 132. In some embodiments, the developer module 124 may include development environments and other tools, APIs, and workflows that developers use to create, package, upload, and manage their applications and asset bundles. According to one or more embodiments, packaging module 132 ingests asset content generated from the developer module 124, as well as developer manifests describing the characteristics of the asset content. The packaging module 132 may generate an asset bundle in the form of an "asset pack" that includes the asset content and, in some embodiments, the developer manifest.

Developer device(s) 120 may also include storage 123. According to one or more embodiments, storage 123 may include one or more non-transitory storage devices, and may be configured to store data, instructions, or the like which may be used by the various computer-executable modules of memory 122. For example, storage 123 may include applications 125, asset content 126, and developer manifests 127. Applications 125 may include applications that are complete or are in the process of being developed. Further, applications 125 may include one or more versions of applications for one or more platform types. In some embodiments, applications 125 may host applications prior to the applications being uploaded to the app distribution system 100. Asset content 126 may include media items, functionality, or other content corresponding to the applications that are complete or are in the process of being developed. Developer manifests 127 include metadata created by the developer for asset content being provided for asset bundles, such as asset content attributes. The developer manifests 127 may include, for example, an identifier, content description, delivery behavior, and the like. The developer manifests 127 and asset content 126 can be transmitted to app distribution system 100 for creation of asset bundles.

In some embodiments, the developer device(s) 120 may additionally or alternatively maintain content on one or more additional network devices. In the example shown, developer network storage 150 may include applications 151, which may include complete or incomplete applications, such as applications still under development, and may include the same or different applications as those stored in applications 125. Application extensions 152 may include add-on components to the applications which may incorporate new content, provide filtering or other asset handling instructions, or the like. Asset content 153 may include media items, functionality, or other content corresponding to the applications that are complete or are in the process of being developed.

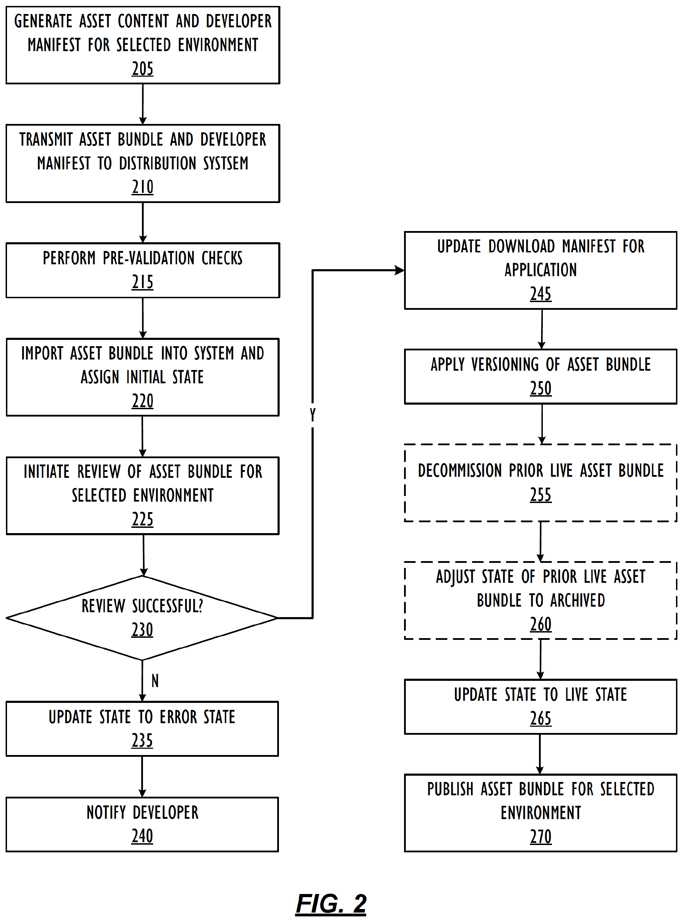

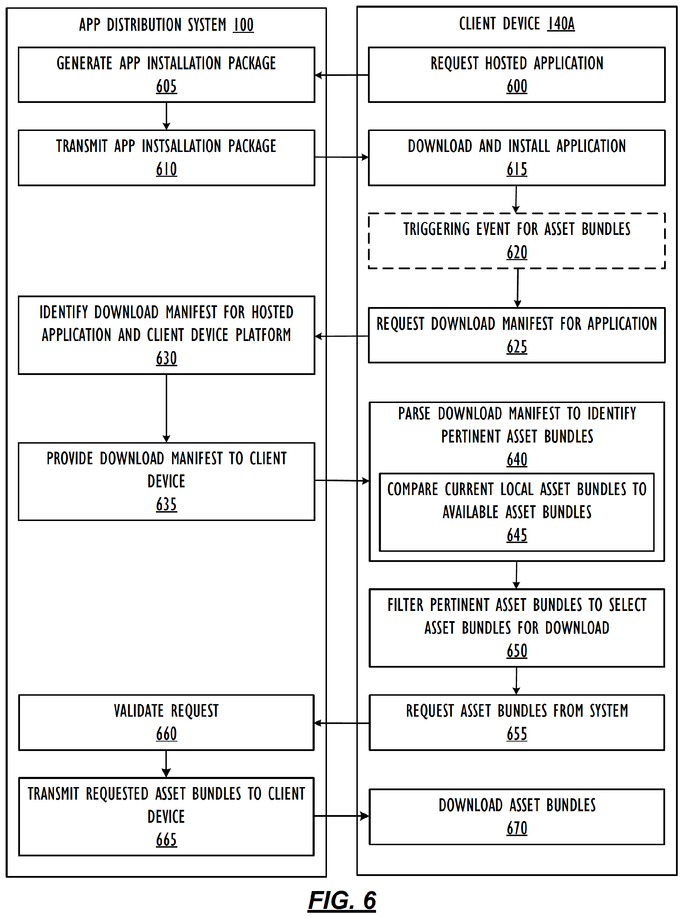

App distribution system 100 may be comprised of one or more components configured to host application data. App distribution system 100 can include one or more servers that can provide the functionality described herein. For example, app distribution system 100 can interface with a developer device or client device to implement the techniques described herein with respect to FIGs. 2 and 6. According to one or more embodiments, app distribution system 100 may include one or more processor(s) 101. The app distribution system 100 may also include a memory 102, which may include one or more memory devices, and which may be configured to include computer readable code executable by one or more processor(s) 101. For example, memory 102 may include a validation module 104, review module 105, version management module 106, and distribution module 107.

The validation module 104 may be configured to perform automated checks and enforcement of policies of asset bundles received from the developer device(s) 120. For example, the validation module 104 may verify that the structure and content of developer manifests, ensure platform compatibility between asset bundles and the associated application and/or platforms, ensure size and content constraints, or the like. The review module 105 may be configured to manage the human and/or automated review processes for applications and asset bundles. According to one or more embodiments, the review module may perform an automated scan on asset bundles for security and policy compliance. In some embodiments, the review module 105 may flag submissions for human review if issues are detected by the automated scan. Further, the review module 105 may track the review status and trigger a state change when the content is ready to move to a new state, for example when the content is ready for internal testing, external testing, full publication, or the like.

The version management module 106 may be configured to apply versioning to newly packaged bundles, update the download manifest to reflect the new live version, track versions by version number, and archive prior live versions for the relevant environment(s). In some embodiments, the version management module 106 may track versions of both applications and asset bundles independently, as well as versions of asset bundles for different platforms. The distribution module 107 may be configured to handle delivery of applications and asset bundles to client devices, such as client devices 140A-140N. The distribution module 107 may publish accepted asset bundles and applications for distribution by the app distribution system 100. The distribution module 107 may also generate and provide download manifests to client devices, manage download processes, and support download triggers.

App distribution system 100 may also include a storage 103. According to one or more embodiments, storage 103 may be configured to store data, instructions, or the like which may be used by the various computer executable modules of memory 102. For example, storage 103 may include applications 108 and associated application extensions 131, asset bundles 109, and download manifests 110. Applications 108 may include software bundles submitted by a developer, for example via developer device(s) 120, for distribution to client devices. The applications 108 may be versioned, and each version can specify which asset bundles may be available or required for the version. The application may be operable upon download and without additional asset bundles. However, the asset bundles for the application may enhance the operation and/or look and feel of the application. In some embodiments, applications 108 may include application extensions 131 may include additional functionality for managing the application. For example, application extensions 131, which may handle asset discovery and filtering parameters which can affect the asset bundles available for a particular application.

Asset bundles 109 include collections of additional content comprised in an asset bundle that may enhance an application. For example, if the application is a game, the asset bundle may include game textures, media files, or the like. The asset bundles 109 may be downloaded independently of the main application package. The asset bundles 109 are versioned separately from the application and can be updated or replaced without requiring a new version of the application to be uploaded to the app distribution system 100. Each asset bundle may be associated with a unique identifier and a developer manifest that describes its contents, supported platforms, download policies, and the like. Download manifests 110 are synthesized metadata files generated by the app distribution system 100 for each application and/or environment, such as an internal testing environment, external testing environment, or public distribution. The download manifests enumerate the available asset bundles for a given app version and platform, providing information such as asset bundle identifiers, versions, download policies, and the like. The download manifest may be used by client devices 140A-140N to determine which asset bundles to download and how to handle updates.

Client device 140A and client device 140N may include one or more user devices for downloading and executing an application and associated content, such as asset bundle content. Example client device 140A may include one or more processor(s) 161. Client device 140A may also include memory 162, which may be comprised of one or more memory devices, and which may be configured to host computer-readable code executable by the one or more processor(s) 161. In the example shown, memory 162 includes an app store 164. According to one or more embodiments, app store 164 may be an application residing on client device 140A which, when executed, provides access to the assets and service provided by app distribution system 100.

Client device 140A may also include storage 163. According to one or more embodiments, storage 163 may include one or more non-transitory storage devices, and may be configured to store data, instructions, or the like which may be used by the various computer executable modules of memory 162. For example, storage 163 may include applications 165, asset content 166, and the like. Applications 165 may include, for example, applications 165 and associated asset content 166 completed by developer device(s) 120 and hosted on app distribution system (100), or on other network storage, such as developer network storage 150.

Turning to FIG. 2, a flowchart is presented illustrating a technique for publishing an asset bundle associated with a hosted application, in accordance with one or more embodiments. Although the various actions are depicted in a particular order, in some embodiments the various actions may be performed in a different order. In still other embodiments, two or more of the actions may occur simultaneously. According to yet other embodiments, some of the actions may not be required or other actions may be included. For purposes of clarity, the flowchart will be described with respect to the various components of FIG. 1. However, it should be understood that the various actions may be taken by alternative components, according to one or more embodiments.

The flowchart begins at block 205, where an app distribution system obtains asset content and a developer manifest from a developer device. The asset content may be associated with a particular application and/or platform. The developer manifest provides metadata provided by the developer describing the bundle's unique identifier, supported client platforms, intended deployment environment, and the like.

The flowchart continues to block 210, where the app distribution system packages an asset bundle from the asset content. As described above, a packaging module may be configured to ingest the asset content and developer manifest and generate an asset bundle, such as an "asset pack," which can be hosted by the app distribution system and/or distributed to a client device.

The flowchart continues at block 215, where the app distribution system performs pre-validation checks on the asset bundle. These checks may include verifying that the bundle does not contain executables, confirming the developer manifest structure and checksums, and enforcing platform policies such as total size and number limits for asset bundles associated with the application.

At block 220, the app distribution system imports the asset bundle into the system and assigns an initial state. For example, the app distribution system may assign an "imported" status to the asset bundle, indicating it is ready for internal testing or submission for review. In some embodiments, the asset bundle contents may be stored within a secure storage of the app distribution system.

The flowchart proceeds to block 225, where the app distribution system initiates review of the asset bundle for the selected environment. According to some embodiments, the review may be performed by a decision engine that performs an automatic routine or workflow for the environment for which the asset bundle was provided. For example, review of an asset bundle for a testing environment may be more lax than review for public distribution. The review may cover policy compliance, security standards, and content evaluation.

At block 230, a determination is made as to whether the review is successful. If the review is not successful, then the flowchart proceeds to block 235, and a state for the asset bundle is updated to an error state. For example, a state machine may transition from "imported" to "error." The flowchart then concludes at block 235, and the developer is notified of the error state. In some embodiments, the notification may provide an explanation of the error, and may provide for resubmission once the cause of the error is addressed.

Returning to block 230, if the review is successful, then the flowchart proceeds to block 245. At block 245, the distribution module 107 then synthesizes or amends the download manifest 110 to include a pointer to the newly live asset bundle, its version identifier, or the like.

The flowchart proceeds to block 250, where the app distribution system applies the versioning of the asset bundle. For example, the version management module 106 may increment the active version counter for the asset bundle's identifier. At optional block 255, the app distribution system may decommission prior asset bundles. For example, depending on retention policy, the distribution module 107 may trigger a decommissioning process to archive live asset bundles of a prior version than the current asset bundle. Thus, at block 260, a state of the prior live asset bundle may be transitioned from "live" to "archived." In some embodiments, the archived asset bundle may be removed from storage, or may have its references indicated as stale references.

The flowchart proceeds to block 265, where a state of the current asset bundle is updated to a live state. For example, a state machine may transition from "imported" to "live." The flowchart concludes at block 265, where the asset content is published to the environment. In some embodiments, the asset bundle is available for retrieval once it is published. For example, client devices 140A-140N that query the download manifest 110 will be able to discover and download the new asset bundle version in accordance with its declared download policy.

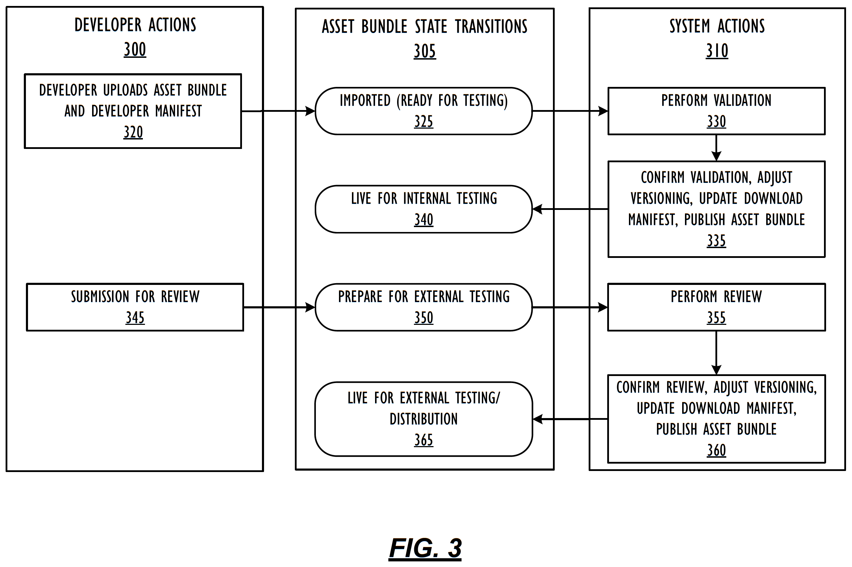

FIG. 3 depicts, in flow diagram form, the lifecycle management of an individual asset bundle within the app distribution system 100 of FIG. 1. The diagram illustrates how developer-initiated events (collectively identified as developer actions 300) interact with automated, server-side processes (collectively identified as system actions 310) to drive state transitions for the asset bundle. Each state is represented by a rounded rectangle, whereas each action that triggers a transition is represented by a rectangle.

The flow diagram begins at block 320, where a developer uploads asset content and a developer manifest to an app distribution system. The upload triggers creation of an asset bundle record, and assigns the asset bundle to an imported state, as shown at 325.

According to one or more embodiments, once the bundle is in the imported state 325, the bundle is ready for testing. Thus, the system may perform, as a system action, validation of the bundle, as shown at block 330. That is, transition to the imported state may trigger the system to perform validation at block 330. Performing validation may include performing integrity checks of the uploaded material, confirming compatibility, or the like. Upon successful validation, the flow diagram proceeds to block 335, and validation is confirmed. In addition, the distribution module 107 may update relevant download manifests, adjust versioning, and/or publish the asset bundle to the associated environment. In this example, confirming validation triggers a state change to live for internal testing 340.

When a developer is satisfied with internal testing results, the developer can trigger a "submit for review" command, for example via a graphical interface of developer module 124. Thus, the state of the asset bundle transitions to prepare for external testing 350. In some embodiments, this state triggers creation of a review ticket for review module 105. The bundle may be queued for review, for example for content scans, policy compliance checks, or the like.

The flow diagram proceeds to block 360, where review is confirmed. In some embodiments, distribution module 107 updates and publishes updated download manifests 110. If the bundle is approved, the app distribution system progresses the state to "live for external testing/distribution" 365. If another bundle of the same identifier was previously marked live for the same environment, the prior bundle may automatically reclassified to an archived or decommissioned state. This may occur, for example, with a prior version of a same asset bundle.

Turning to FIG . 4, an example diagram is shown of different versions of an application that can be hosted by app distribution system 100. In particular, the example shows app version 1 400A, and app version 2 400B. App version 1 400A is associated with an app V1 extension 405A, whereas app version 2 400B is associated with app V2 extension 405B. The extensions to the applications may provide references to available asset bundles. The architecture described herein allows for application data to be provided in the form of the application itself, or additional data in the form of an asset bundle. Further, the asset bundles may be provided to one or more different versions of the application. For example, if a client device 140A runs app version 1, then client device 140A may be allowed to additionally download asset bundle A 415 and asset bundle B 420. By contrast, client device 140N may run version 2 400B. For example, client device 140N may have upgraded to app version 2 400B from app version 1400 A. As shown, asset bundle B 420 and asset bundle C 425 may be available to app version 2 400B by way of app V2 extension 405B. However, asset bundle A 415 is not available to app version 2 400B. For example, asset bundle A 415 may not be compatible with app version 2 400B. In this way, the app V2 extension 405B may include logic to filter out asset bundle A 415 from being made available for app version 2 400B.

The architecture described herein also allows for more efficient upgrading by way of the asset bundles. For example, if client device 140A runs version 1 400A, client device 140A can download asset bundle B 420 in order to obtain additional functionality that is also available to app version 2 400B, without having to download and install an entirely new installation package for the application in the form of app version 2 400B. Moreover, from a developer perspective, each of asset bundle A, asset bundle B, and asset bundle C may be associated with different content, different versioning, and the like. For example, asset bundle B 420 may be published prior to asset bundle C 425. However a second version of asset bundle B may replace a first version of asset bundle B 420 after asset bundle C 425 has been published. Thus, the versioning of the individual asset bundles need not be consistent, nor does the versioning of the asset bundles need to be consistent with the underlying applications to which they belong. The diagram highlights the decoupled version management of the architecture, which allows multiple application versions to share the same live asset bundle.

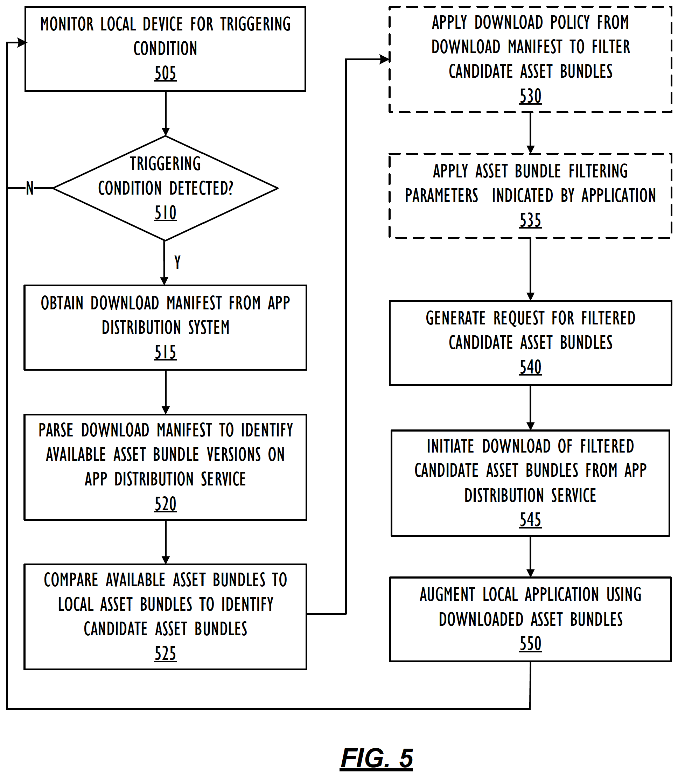

FIG. **5** illustrates a flowchart of a technique for downloading asset bundles at a client device, in accordance with one or more embodiments. Although the various actions are depicted in a particular order, in some embodiments the various actions may be performed in a different order. In still other embodiments, two or more of the actions may occur simultaneously. According to yet other embodiments, some of the actions may not be required or other actions may be included. For purposes of clarity, the flowchart will be described with respect to the various components of FIG. **1****.** However, it should be understood that the various actions may be taken by alternative components, according to one or more embodiments.

The flowchart begins at block 505, where the client device 140A continuously monitors local operating conditions to detect a "triggering condition." As used herein, a triggering condition may include, for example, first-run installation of an application, launch of an already-installed application, a periodic background poll initiated by a background asset daemon, an explicit refresh request made through a public API, or the like. Thus, a determination is made at block 510 as to whether a triggering condition is detected. If no triggering condition is detected, then the flowchart returns to block 505, and the client device continues to monitor for a triggering condition.

Returning to block 510, if a triggering condition is detected, then the flowchart proceeds to block 515, and the client device obtains a download manifest from the app distribution system 100. For example, the client device may transmit a request across network(s) 130 to obtain a current download manifest from the app distribution system 100. The distribution module 107, executing on processor(s) 101 of the app distribution system 100, retrieves the download manifest corresponding to the requesting application and/or platform, and returns that download manifest to the client device. Then, at block 520, the client device may parse the received download manifest to identify asset bundles that the distribution system currently designates as live for that application and platform. Parsing may include determining bundle identifiers, version numbers, download policy tags, and the like.

The flowchart proceeds to block 525, where the client device compares the asset bundles identified in the download manifest to metadata describing any asset bundles already obtained by the client device. By performing version comparison locally, the client device identifies asset bundles that have been updated, or are otherwise missing, that will be considered for download, thereby conserving bandwidth and storage. This comparison yields a set of "candidate asset bundles" for the application.

At optional block 530, the candidate asset bundles are filtered according to a download policy from the download manifest. For each asset bundle that has been identified as updated or missing, the client device applies the download policy field specified in the download manifest. In some embodiments, essential bundles may be automatically selected, whereas prefetch bundles may be selected based on bandwidth conditions, user preference, or the like. Further, in some embodiments, on-demand bundles may be selected only if an API call has been made by the application. Other various download policies may be defined by the system, developer, or the like.

The flowchart proceeds to optional block 535, where a second level of filtering may be applied. In particular, asset bundle filtering parameters indicated in the application are used to further filter the available asset bundles. Accordingly, the client device provides the application or its extension an opportunity to programmatically filter the list of asset bundles identified for download after applying the download policy. In some embodiments, this application-driven filtering step allows developers to implement custom logic to override default download behavior.

At block 540, the client device generates a request message for the filtered candidate asset bundles. In some embodiments, the asset bundle request may be generated to further include device capability metadata that the distribution system may use for asset bundle selection. Then, at block 540, the client device transmits the request to the distribution module 107 of the app distribution system. Upon receipt, the distribution module consults the validation module 104 and the version management module 106 to confirm that the requested bundles are currently live, are compatible with the requesting platform, and do not violate any predefined constraints. If the request passes validation, the distribution module transmits asset bundles to the client device. In some embodiments, the asset bundles may be encrypted, and decryption keys may also be provided.

The flowchart concludes at block 545, where after download and successful decryption, the client device mounts or otherwise integrates the asset bundles into the application. The application may then access the content, thereby augmenting operation of the application, content, or the like. In some embodiments, the flowchart may return to block 505, and the local device is monitored for a next triggering condition.

FIG. **6** illustrates an example flow diagram for a client device accessing asset bundles, in accordance with one or more embodiments. Although the various actions are depicted in a particular order, in some embodiments the various actions may be performed in a different order. In still other embodiments, two or more of the actions may occur simultaneously. According to yet other embodiments, some of the actions may not be required or other actions may be included. For purposes of clarity, the flowchart will be described with respect to the various components of FIG. **1****.** However, it should be understood that the various actions may be taken by alternative components, according to one or more embodiments.

The flowchart begins at block 600, where the client device 140A initiates a request for a hosted application through a user interface on client device 140A. The request is transmitted to the distribution module 107 of the app distribution system 100. In response, at block 605, the app distribution system 100 generates an application installation package. The package may include, for example, the executable application binary, asset bundle information, and a pointer to the current download manifest. At block 610, the generated installation package is transmitted to the client device 140A. Then, at block 615, the client device 140A downloads and installs the application.

The flowchart proceeds to optional block 620, where a triggering event for asset bundle discovery is detected. As described above, such events may include an initial installation of the application, a periodic background poll, an explicit API call from the application, or the like. In some embodiments, the installation of the application at block 615 may satisfy the criteria of a triggering event. Other examples of triggering events include post-install essential download requirements, background polling events, or explicit API-level refresh calls from the application. In response, at block 625, the client device 140A may request the download manifest that was identified in block 615.

The request is routed to distribution module 107, which retrieves the download manifest at block 630. In some embodiments, the download manifest may be identified based on a pointer previously provided to the client device 140A at block 615. Then, at block 635, the app distribution system 100 provides the download manifest to the client device. According to one or more embodiments, the download manifest may include metadata about available asset bundles for the combination of the application and platform, including bundle identifiers, version numbers, download policies, and the like.

The flowchart proceeds to block 640, where the client device 140A parses the download manifest to identify pertinent asset bundles. In some embodiments, the client device compares the versions enumerated in the download manifest to metadata describing any asset bundles already stored locally in storage of the client device, as shown at block 645. By performing version comparison locally, the system ensures that only bundles that have been updated, or are otherwise missing, will be considered for download, thereby conserving bandwidth and storage.

At block 650, for each asset bundle that has been identified as updated or missing, the client device applies the download policy field specified in the download manifest. Although not shown, other filtering techniques may be applied to identify the pertinent assets bundles. For example, filtering parameters may be used to filter the available asset bundles in a manner defined programmatically by the application. Then, the client device transmits the request to the distribution module 107 of the app distribution system 100. At block 665, the app distribution system 100 validates the request. After successful validation, the flowchart proceeds to block 665, and the app distribution system 100 transmits the requested asset bundles to the client device. The flowchart concludes at block 670, where the client device 140A signals the application that new content is available and downloads the asset bundles.

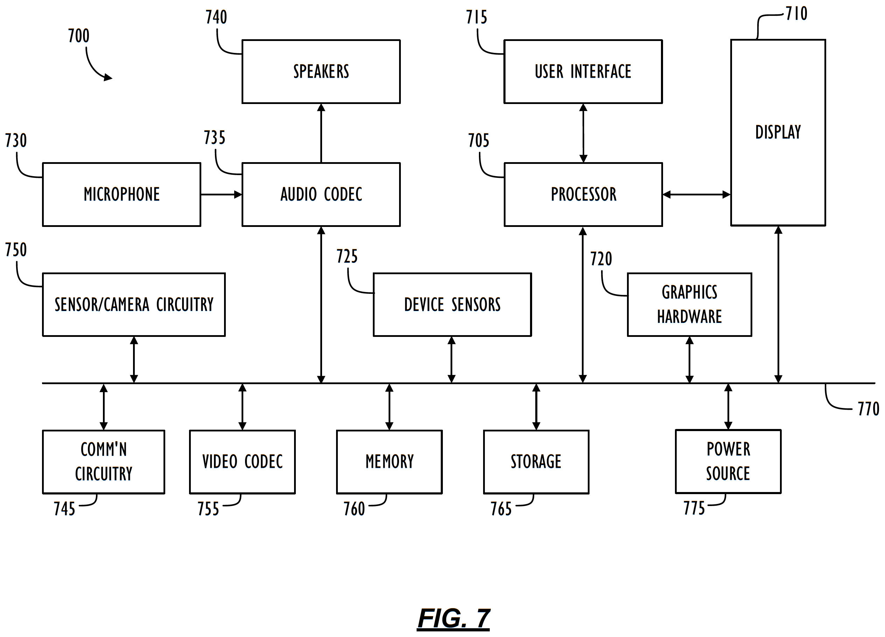

Referring now to FIG. 7, a simplified functional block diagram of an illustrative programmable electronic device 700 for providing access to an app store is shown, according to one embodiment. Electronic device 700 could be, for example, a mobile telephone, personal media device, portable camera, or a tablet, notebook or desktop computer system. As shown, electronic device 700 may include processor 705, display 710, user interface 715, graphics hardware 720, device sensors 725 (e.g., proximity sensor/ambient light sensor, accelerometer and/or gyroscope), microphone 730, audio codec(s) 735, speaker(s) 740, communications circuitry 745, image capture circuit or unit 750, which may, e.g., comprise multiple camera units/optical sensors having different characteristics (as well as camera units that are housed outside of, but in electronic communication with, device 700), video codec(s) 755, memory 760, storage 765, and communications bus 770.

Processor 705 may execute instructions necessary to carry out or control the operation of many functions performed by device 700 (*e.g.,* such as the download of applications and/or additional resources in accordance with the various embodiments described herein). Processor 705 may, for instance, drive display 710 and receive user input from user interface 715. User interface 715 can take a variety of forms, such as a button, keypad, dial, a click wheel, keyboard, display screen and/or a touch screen. User interface 715 could, for example, be the conduit through which a user may view a captured video stream and/or indicate particular images(s) that the user would like to capture or share (e.g., by clicking on a physical or virtual button at the moment the desired image is being displayed on the device's display screen).

In one embodiment, display 710 may display a video stream as it is captured while processor 705 and/or graphics hardware 720 and/or image capture circuitry contemporaneously store the video stream (or individual image frames from the video stream) in memory 760 and/or storage 765. Processor 705 may be a system-on-chip such as those found in mobile devices and include one or more dedicated graphics processing units (GPUs). Processor 705 may be based on reduced instruction-set computer (RISC) or complex instruction-set computer (CISC) architectures or any other suitable architecture and may include one or more processing cores. Graphics hardware 720 may be special purpose computational hardware for processing graphics and/or assisting processor 705 perform computational tasks. In one embodiment, graphics hardware 720 may include one or more programmable graphics processing units (GPUs).

Image capture circuitry 750 may comprise one or more camera units configured to capture images, e.g., in accordance with this disclosure. Output from image capture circuitry 750 may be processed, at least in part, by video codec(s) 755 and/or processor 705 and/or graphics hardware 720, and/or a dedicated image processing unit incorporated within circuitry 750. Images so captured may be stored in memory 760 and/or storage 765. Memory 760 may include one or more different types of media used by processor 705, graphics hardware 720, and image capture circuitry 750 to perform device functions. For example, memory 760 may include memory cache, read-only memory (ROM), and/or random-access memory (RAM). Storage 765 may store media (*e.g.,* audio, image and video files), computer program instructions or software, preference information, device profile information, and any other suitable data. Storage 765 may include one or more non-transitory storage media including, for example, magnetic disks (fixed, floppy, and removable) and tape, optical media such as CD-ROMs and digital video disks (DVDs), and semiconductor memory devices such as Electrically Programmable Read-Only Memory (EPROM), and Electrically Erasable Programmable Read-Only Memory (EEPROM). Memory 760 and storage 765 may be used to retain computer program instructions or code organized into one or more modules and written in any desired computer programming language. When executed by, for example, processor 705, such computer program code may implement one or more of the methods described herein. Power source 775 may comprise a rechargeable battery (e.g., a lithium-ion battery, or the like) or other electrical connection to a power supply, e.g., to a mains power source, that is used to manage and/or provide electrical power to the electronic components and associated circuitry of electronic device **700.**

In the foregoing description, numerous specific details are set forth, such as specific configurations, properties, and processes, etc., in order to provide a thorough understanding of the embodiments. In other instances, well-known processes and manufacturing techniques have not been described in particular detail in order to not unnecessarily obscure the embodiments. Reference throughout this specification to "one embodiment," "an embodiment," "another embodiment," "other embodiments," "some embodiments," and their variations means that a particular feature, structure, configuration, or characteristic described in connection with the embodiment is included in at least one embodiment. Thus, the appearances of the phrase "for one embodiment," "for an embodiment," "for another embodiment," "in other embodiments," "in some embodiments," or their variations in various places throughout this specification are not necessarily referring to the same embodiment. Furthermore, the particular features, structures, configurations, or characteristics may be combined in any suitable manner in one or more embodiments.

In the following description and claims, the terms "coupled" and "connected," along with their derivatives, may be used. It should be understood that these terms are not intended as synonyms for each other. "Coupled" is used herein to indicate that two or more elements or components, which may or may not be in direct physical or electrical contact with each other, cooperate or interact with each other. "Connected" is used to indicate the establishment of communication between two or more elements or components that are coupled with each other.

Some portions of the preceding detailed description have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below, refer to the action and processes of a computer system, or similar electronic computing system, that manipulates and transforms data represented as physical (electronic) quantities within the computer system's registers and memories into other data similarly represented as physical quantities within the computer system memories or registers or other such information storage, transmission or display devices.

Embodiments described herein can relate to an apparatus for performing a computer program (e.g., the operations described herein, etc.). Such a computer program may be stored in a non-transitory computer readable medium. A machine-readable medium includes any mechanism for storing information in a form readable by a machine (e.g., a computer). For example, a machine-readable (e.g., computer readable) medium includes a machine (e.g., a computer) readable storage medium (e.g., read only memory ("ROM"), random access memory ("RAM"), magnetic disk storage media, optical storage media, flash memory devices).

Although operations or methods are described above in terms of some sequential operations, it should be appreciated that some of the operations described may be performed in a different order. Moreover, some operations may be performed in parallel, rather than sequentially. Embodiments described herein are not described with reference to any particular programming language. It will be appreciated that a variety of programming languages may be used to implement the various embodiments of the disclosed subject matter. In utilizing the various aspects of the embodiments described herein, it would become apparent to one skilled in the art that combinations, modifications, or variations of the above embodiments are possible for managing components of a processing system to increase the power and performance of at least one of those components. Thus, it will be evident that various modifications may be made thereto without departing from the broader spirit and scope of at least one of the disclosed concepts set forth in the following claims. The specification and drawings are, accordingly, to be regarded in an illustrative sense, rather than a restrictive sense.

In the development of any actual implementation of one or more of the disclosed concepts (e.g., such as a software and/or hardware development project, etc.), numerous decisions must be made to achieve the developers' specific goals (e.g., compliance with system-related constraints and/or business-related constraints). These goals may vary from one implementation to another, and this variation could affect the actual implementation of one or more of the disclosed concepts set forth in the embodiments described herein. Such development efforts might be complex and time-consuming, but may still be a routine undertaking for a person having ordinary skill in the art in the design and/or implementation of one or more of the inventive concepts set forth in the embodiments described herein.

In a first example a method as described herein is directed to receiving, by an application distribution system, an asset bundle comprising asset content and a developer manifest, wherein the asset bundle is received for a first environment and corresponds to a hosted application; determining review parameters for the asset bundle based on the first environment; processing, by a decision engine, a review of the asset bundle in accordance with the review parameters; modifying a download manifest for the hosted application to identify the asset bundle, wherein the download manifest comprises a plurality of available asset bundles for the hosted application for the first environment; and publishing the asset bundle for distribution.

In some embodiments, the asset bundle is provided for download separate from the hosted application.

In some embodiments, the developer manifest indicates a plurality of supported platforms, wherein the download manifest is a first download manifest for the hosted application, and wherein generating the first download manifest for the asset bundle comprises generating a plurality of download manifests each corresponding to one of the plurality of supported platforms.

In some embodiments, the developer manifest comprises asset content attributes.

In some embodiments, the method further comprises determining one or more environments for which the asset bundle is received; identifying a previously published live asset bundle for the first environment; and in response to the asset bundle going live, decommissioning the previously published live asset bundle for the first environment.

In some embodiments, the current live asset pack is associated with a first version number, and wherein the asset bundle is assigned a version number incremented from the first version number.

In some embodiments, the version number of the asset bundle differs from a version number of the hosted application.

In some embodiments, the version number of the asset bundle for the first environment differs from a version number for the asset bundle for a second environment.

In some embodiments, the method further includes, in response to receiving an asset bundle request for the hosted application: providing a synthesized version of the download manifest comprising an indication of the available asset bundles for the hosted application, wherein the download manifest indicates a download policy for each available asset bundle for the hosted application; and in response to receiving a request for one or more of the available asset bundles, providing the one or more available asset bundles for download in accordance with the download policy for each available asset bundle for the hosted application.

In a second example, a method includes monitoring, by a local device, for a triggering condition associated with an application running on the client device; in response to detecting the triggering condition, obtaining a download manifest from an application distribution system, the download manifest identifying a plurality of asset bundles for the application; identifying one or more candidate asset bundles based on a download policy in the download manifest; transmitting, to the application distribution system, a request for a first candidate asset bundle of the one or more asset bundles; and in response to receiving the first candidate asset bundle, integrating the first candidate asset bundle into the application on the local device.

In some embodiments, the method further includes selecting the first candidate asset bundle based on application-defined filtering parameters for the application.

In some embodiments, the application on the local device corresponds to an application extension in which the application-defined filtering parameters are defined

In some embodiments, the request comprises capability metadata for the local device.

In some embodiments, identifying the one or more candidate asset bundles comprises parsing the download manifest to identify asset bundles designated as live for the application.

In some embodiments, identifying the one or more candidate asset bundles comprises comparing metadata of the candidate asset bundles to metadata of one or more asset bundles already stored on the local device.

In some embodiments, wherein monitoring for the triggering condition comprises continuously monitoring operating conditions of the local device.

According to one or more embodiments, the various example methods described above may be encoded as computer readable code and stored on a non-transitory computer readable medium. In some embodiments, such computer readable media may be part of a system that also includes one or more processors, which may execute the computer readable code.

As used in the description above and the claims below, the phrases "at least one of A, B, or C" and "one or more of A, B, or C" include A alone; B alone; C alone; a combination of A and B; a combination of B and C; a combination of A and C; and a combination of A, B, and C. That is, the phrases "at least one of A, B, or C" and "one or more of A, B, or C" means A, B, C, or any combination thereof, such as one or more of a group of elements consisting of A, B and C, and should not be interpreted as requiring at least one of each of the listed elements A, B and C, regardless of whether A, B and C are related as categories or otherwise. Furthermore, the use of the article "a" or "the" in introducing an element should not be interpreted as being exclusive of a plurality of elements. Also, the recitation of "A, B, and/or C" is equal to "at least one of A, B, or C." Also, the use of "a" refers to "one or more" in the present disclosure. For example, "an application" refers to "one application" or "a group of applications."

Exemplary embodiments of the present disclosure are set out in the following items:
1. A computer readable medium, optionally being non-transitory, comprising computer readable code executable by one or more processors to:
   receive, by an application distribution system, an asset bundle comprising asset content and a developer manifest, wherein the asset bundle is received for a first environment and corresponds to hosted application;
   determine review parameters for the asset bundle based on the first environment;
   process, by a decision engine, a review of the asset bundle in accordance with the review parameters;
   modify a system manifest for the hosted application to include the asset bundle, wherein the system manifest comprises a plurality of available asset bundles for the hosted application for the first environment; and
   publish the asset bundle for distribution.
2. The computer readable medium of item 1, wherein the asset bundle is provided for download separate from the hosted application.
3. The computer readable medium of any of items 1-1, wherein the developer manifest indicates a plurality of supported platforms, wherein the system manifest is a first system manifest for the asset bundle, and wherein the computer readable code to generate the first system manifest for the asset bundle comprises computer readable code to generate a plurality of system manifests each corresponding to one of the plurality of supported platforms.
4. The computer readable medium of any of items 1-3, wherein the developer manifest comprises asset content attributes.
5. The computer readable medium of any of items 1-4, further comprising computer readable code to:
   determine one or more environments for which the asset bundle is received;
   identify a current live asset pack for the first environment; and
   in response to the asset bundle going live, decommission the current live asset pack for the first environment.
6. The computer readable medium of item 5, wherein the current live asset pack is associated with a first version number, and wherein the asset bundle is assigned a version number incremented from the first version number.
7. The computer readable medium of item 6, wherein the version number of the asset bundle differs from a version number of the hosted application.
8. The computer readable medium of any of items 6-7, wherein the version number of the asset bundle for the first environment differs from a version number for the asset bundle for a second environment.
9. The computer readable medium of any of items 1-8, wherein the first environment is identified from a plurality of potential environments, and wherein an asset bundle state is assigned based on a readiness for one or more of the plurality of potential environments.
10. The computer readable medium of any of items 1-9, further comprising computer readable code to, in response to receiving an asset bundle request for the hosted application:
   provide a synthesized version of the system manifest comprising an indication of the available asset bundles for the hosted application and a download policy for each available asset bundle for the hosted application; and
   in response to receiving a request for one or more of the available asset bundles, provide the one or more available asset bundles for download in accordance with the download policy for each of the one or more available asset bundles.
11. A method comprising:
   receiving, by an application distribution system, an asset bundle comprising asset content and a developer manifest, wherein the asset bundle is received for a first environment and corresponds to a hosted application;
   determining review parameters for the asset bundle based on the first environment;
   processing, by a decision engine, a review of the asset bundle in accordance with the review parameters;
   modifying a system manifest for the hosted application to include the asset bundle, wherein the system manifest comprises a plurality of available asset bundles for the hosted application for the first environment; and
   publishing the asset bundle for distribution.
12. The method of item 11, wherein the asset bundle is provided for download separate from the hosted application.
13. The method of any of items 11-12, wherein the developer manifest indicates a plurality of supported platforms, wherein the system manifest is a first system manifest for the asset bundle, and wherein generating the first system manifest for the asset bundle comprises generating a plurality of system manifests each corresponding to one of the plurality of supported platforms.
14. The method of any of items 11-13, wherein the developer manifest comprises asset content attributes.
15. The method of any of items 11-14, further comprising:
   determining one or more environments for which the asset bundle is received;
   identifying a current live asset pack for the first environment; and
   in response to the asset bundle going live, decommissioning the current live asset pack for the first environment.
16. The method of item 15, wherein the current live asset pack is associated with a first version number, and wherein the asset bundle is assigned a version number incremented from the first version number.
17. The method of item 16, wherein the version number of the asset bundle differs from a version number of the hosted application.
18. The method of any of items 16-17, wherein the version number of the asset bundle for the first environment differs from a version number for the asset bundle for a second environment.
19. The method of any of items 11-18, wherein the first environment is identified from a plurality of potential environments, and wherein an asset bundle state is assigned based on a readiness for one or more of the plurality of potential environments.
20. The method of any of items 11-19, further comprising, in response to receiving an asset bundle request for the hosted application:
   providing a synthesized version of the system manifest comprising an indication of the available asset bundles for the hosted application and a download policy for each available asset bundle for the hosted application; and
   in response to receiving a request for one or more of the available asset bundles, providing the one or more available asset bundles for download in accordance with the download policy for each of the one or more available asset bundles.
21. A system comprising:
   one or more processors; and
   one or more computer readable media comprising computer readable code executable by the one or more processors to:
      receive, by an application distribution system, an asset bundle comprising asset content and a developer manifest, wherein the asset bundle is received for a first environment and corresponds to hosted application;
      determine review parameters for the asset bundle based on the first environment;
      process, by a decision engine, a review of the asset bundle in accordance with the review parameters;
      modify a system manifest for the hosted application to include the asset bundle, wherein the system manifest comprises a plurality of available asset bundles for the hosted application for the first environment; and
      publish the asset bundle for distribution.
22. The system of item 21, wherein the asset bundle is provided for download separate from the hosted application.
23. The system of any of items 21-22, wherein the developer manifest indicates a plurality of supported platforms, wherein the system manifest is a first system manifest for the asset bundle, and wherein the computer readable code to generate the first system manifest for the asset bundle comprises computer readable code to generate a plurality of system manifests each corresponding to one of the plurality of supported platforms.
24. The system of any of items 21-23, wherein the developer manifest comprises asset content attributes.
25. The system of any of items 21-24, further comprising computer readable code to:
   determine one or more environments for which the asset bundle is received;
   identify a current live asset pack for the first environment; and
   in response to the asset bundle going live, decommission the current live asset pack for the first environment.
26. The system of item 25, wherein the current live asset pack is associated with a first version number, and wherein the asset bundle is assigned a version number incremented from the first version number.
27. The system of item 26, wherein the version number of the asset bundle differs from a version number of the hosted application.
28. The system of any of items 26-27, wherein the version number of the asset bundle for the first environment differs from a version number for the asset bundle for a second environment.
29. The system of any of items 21-28, wherein the first environment is identified from a plurality of potential environments, and wherein an asset bundle state is assigned based on a readiness for one or more of the plurality of potential environments.
30. The system of any of items 21-29, further comprising computer readable code to, in response to receiving an asset bundle request for the hosted application:
   provide a synthesized version of the system manifest comprising an indication of the available asset bundles for the hosted application and a download policy for each available asset bundle for the hosted application; and
   in response to receiving a request for one or more of the available asset bundles, provide the one or more available asset bundles for download in accordance with the download policy for each of the one or more available asset bundles.

## Claims

1. A method comprising:
receiving, by an application distribution system, an asset bundle comprising asset content and a developer manifest, wherein the asset bundle is received for a first environment and corresponds to a hosted application;
determining review parameters for the asset bundle based on the first environment;
processing, by a decision engine, a review of the asset bundle in accordance with the review parameters;
modifying a download manifest for the hosted application to identify the asset bundle, wherein the download manifest comprises a plurality of available asset bundles for the hosted application for the first environment; and
publishing the asset bundle for distribution.

2. The method of claim 1, wherein the asset bundle is provided for download separate from the hosted application.

3. The method of any of claims 1-2, wherein the developer manifest indicates a plurality of supported platforms, wherein the download manifest is a first download manifest for the hosted application, and wherein the computer readable code to generate the first download manifest for the asset bundle comprises computer readable code to generate a plurality of download manifests each corresponding to one of the plurality of supported platforms.

4. The method of any of claims 1-3, wherein the developer manifest comprises asset content attributes.

5. The method of any of claims 1-4, further comprising computer readable code to:
determining one or more environments for which the asset bundle is received;
identifying a previously published live asset bundle for the first environment; and
in response to the asset bundle going live, decommissioning the previously published live asset bundle for the first environment.

6. The method of claim 5, wherein the current live asset pack is associated with a first version number, and wherein the asset bundle is assigned a version number incremented from the first version number.

7. The method of claim 6, wherein the version number of the asset bundle differs from a version number of the hosted application.

8. The method of any of claims 6-7, wherein the version number of the asset bundle for the first environment differs from a version number for the asset bundle for a second environment.

9. The method of any of claims 1-8, wherein the first environment is identified from a plurality of potential environments, and wherein an asset bundle state is assigned based on a readiness for one or more of the plurality of potential environments.

10. The method of any of claims 1-9, further comprising:
providing a synthesized version of the download manifest comprising an indication of the available asset bundles for the hosted application, wherein the download manifest indicates a download policy for each available asset bundle for the hosted application; and
in response to receiving a request for one or more of the available asset bundles, providing the one or more available asset bundles for download in accordance with the download policy for each available asset bundle for the hosted application.

11. A computer readable medium comprising computer readable code for performing the method of any of claims 1-10.

12. A system comprising:
one or more processors; and
one or more computer readable media comprising computer readable code executable by the one or more processors to:
receive, by an application distribution system, an asset bundle comprising asset content and a developer manifest, wherein the asset bundle is received for a first environment and corresponds to a hosted application;
determine review parameters for the asset bundle based on the first environment;
process, by a decision engine, a review of the asset bundle in accordance with the review parameters;
modify a download manifest for the hosted application to identify the asset bundle, wherein the download manifest comprises a plurality of available asset bundles for the hosted application for the first environment; and
publish the asset bundle for distribution.

13. The system of claim 12, wherein the asset bundle is provided for download separate from the hosted application.

14. The system of any of claims 12-13, further comprising computer readable code to:
determine one or more environments for which the asset bundle is received;
identify a previously published live asset bundle for the first environment; and
in response to the asset bundle going live, decommission the previously published live asset bundle for the first environment.

15. The system of any of claims 12-14, further comprising computer readable code to, in response to receiving an asset bundle request for the hosted application:
provide a synthesized version of the download manifest comprising an indication of the available asset bundles for the hosted application, wherein the download manifest indicates a download policy for each available asset bundle for the hosted application; and
in response to receiving a request for one or more of the available asset bundles, provide the one or more available asset bundles for download in accordance with the download policy for each available asset bundle for the hosted application.
